# EUROPEAN PATENT APPLICATION

(11) **EP 4 485 555 A1**
(43) Date of publication of application: **01.01.2025**
(21) Application number: 24178808.2
(22) Date of filing: 29.05.2024
(51) Int. Cl.: H01M 4/04, H01M 4/139, H01M 4/64, H01M 4/02

(54) **ELECTRODE, ELECTRODE ASSEMBLY AND RECHARGEABLE BATTERY INCLUDING THE SAME**

(30) Priority: 27.06.2023 KR 20230082960
(71) Applicant: Samsung SDI Co., Ltd., Yongin-si, Gyeonggi-do 17084 (KR)
(72) Inventor: Kang, Minjung, 17084 Yongin-si, Gyeonggi-do (KR)
(74) Representative: Gulde & Partner

(57) **Abstract**

An exemplary embodiment of the present disclosure provides a rechargeable battery electrode (11, 12, 700, 701, 703, 704) including: a substrate (70) configured to have a first pressurized region and a second pressurized region; and an active material layer (71, 72, 73, 74, 75, 76, 77) configured to have a first portion (D1) formed in the first pressurized region and a second portion (D2) formed in the second pressurized region, wherein a thickness of the first portion (D1) is thicker than a thickness of the second portion (D2).

## Description

### BACKGROUND

### (a) Field

The present disclosure relates to an electrode, and more particularly, to an electrode for a rechargeable (or secondary) battery, an electrode assembly, and a rechargeable battery including the same.

### (b) Description of the Related Art

A rechargeable (or secondary) battery may be repeatedly charged and discharged, unlike a primary battery. Small-capacity rechargeable batteries may be used in portable electronic devices such as mobile phones, notebook computers, and camcorders. Large-capacity and high-density rechargeable batteries may be used for power for motor driving of hybrid vehicles and electric vehicles, or energy storage.

Such rechargeable batteries may be manufactured by sealing an electrode assembly together with an electrolyte in a case. The electrode assembly may have a structure in which a positive electrode, a separator, and a negative electrode are stacked.

The positive electrode and the negative electrode may be formed by continuously applying active material on a long strip-shaped substrate to form an active material layer and then winding it to produce a jelly roll-shaped electrode assembly, or a stacked electrode assembly may be manufactured by stacking sheet-shaped electrodes cut to a certain length.

Meanwhile, in order to improve productivity of electrodes, a multi-row coating method has been developed in which active materials are applied at regular intervals and then cut to produce multiple electrode assemblies together. Accordingly, in the multi-row coating method, a region where the active material is applied and a region where the active material is not applied are repeatedly positioned.

In general, it may be advantageous in terms of productivity to perform compression after applying the active material but before cutting into each electrode, but there is a problem in that an electrode plate is damaged during compression due to a difference in elongation between the region where the active material is applied and the region where the active material is not applied.

To solve this problem, a slitting process is performed after applying the active material, and then a compression process is performed, but after separating each electrode, the compression process may be required to be performed individually, and thus there is a problem in that productivity decreases as a number of plates that need to be compressed increases.

### SUMMARY

An embodiment of the present disclosure attempts to provide an electrode for a rechargeable (or secondary) battery, an electrode assembly, and a rechargeable battery including the same, capable of minimizing damage to an electrode plate due to a difference in elongation between applied and uncoated regions even in a case where multiple active material columns are compressed without separating each active material column.

An exemplary embodiment of an aspect of the present disclosure provides a secondary or rechargeable battery electrode including: a substrate configured to have (e.g., including) a first pressurized region and a second pressurized region; and an active material layer configured to have a first portion formed in the first pressurized region and a second portion formed in the second pressurized region, wherein a thickness of the first portion is thicker than a thickness of the second portion.

The active material layer may include an upper active material layer disposed on a first surface of the substrate and a lower active material layer disposed on a second surface of the substrate, and the lower active material layer and the upper active material layer may be formed to be symmetrical about the substrate.

The substrate may have an uncoated region where the active material layer is not formed, and the second portion may be positioned between the first portion and the uncoated region.

A thickness of the second portion may gradually decrease as it moves away from the first portion.

The second portion may have a multi-stage structure including a plurality of portions with different thicknesses.

The active material layer may include an upper active material layer disposed on a first surface of the substrate and a lower active material layer disposed on a second surface of the substrate, a first portion of the lower active material layer may be positioned in a portion corresponding to the first portion of the upper active material layer, and the second portion of the upper active material layer and the second portion of the lower active material layer may be positioned at opposite sides of the first portion.

The first portion may include an upper active material layer disposed on a first surface of the substrate and a lower active material layer disposed on a second surface of the substrate, and the second portion may include the upper active material layer.

The upper active material layer of the first portion and the upper active material layer of the second portion may be formed integrally to have a same thickness.

The upper active material layer of the second portion may extend beyond the lower active material layer of the first portion.

The upper active material layer of the second portion may extend by 3 mm or more than a boundary of the lower active material layer of the first portion.

The first portion may include an upper active material layer disposed on a first surface of the substrate and a lower active material layer overlapping the upper active material layer and disposed on a second surface of the substrate, and the second portion may include the upper active material layer that does not overlap the lower active material layer, and the lower active material layer that does not overlap the upper active material layer.

The upper active material layer of the first portion and the upper active material layer of the second portion may be formed integrally to have a same thickness, and the lower active material layer of the first portion and the lower active material layer of the second portion may be formed integrally to have a same thickness.

A density of the first portion may be larger than a density of the second portion.

An exemplary embodiment of another aspect of the present disclosure provides electrode assembly comprising: a first electrode configured to include an electrode of the present disclosure; a second electrode configured to have opposite polarity to that of the first electrode (may be as well an electrode of the present disclosure); and a separator positioned between the first electrode and the second electrode; wherein the electrode assembly is formed by winding the first electrode, the separator, and the second electrode in an overlapping state.

An exemplary embodiment of still another aspect of the present disclosure provides a rechargeable battery comprising: an electrode assembly of the present disclosure; a case configured to accommodate the electrode assembly and an electrolyte solution together; and a cap assembly configured to seal the case.

An exemplary embodiment of still another aspect of the present disclosure provides a method of manufacturing a rechargeable battery electrode, including providing a substrate including a first pressurized region and a second pressurized region, forming an active material layer on the substrate, such that the active material layer includes a first portion on the first pressurized region and a second portion on the second pressurized region, a thickness of the first portion being thicker than a thickness of the second portion, and compressing the first portion of the active material layer.

In an embodiment of the present disclosure, in a case where an active material layer is formed, damage to the electrode plate due to a difference in elongation between the coated region and the uncoated region may be minimized even though multiple rows of the active material layer are compressed.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

Features will become apparent to those of skill in the art by describing in detail exemplary embodiments with reference to the attached drawings, in which:
FIG. 1 illustrates a schematic cross-sectional view of an electrode according to an embodiment.
FIG. 2 to FIG. 4 each illustrate a view for describing an manufacturing process for an electrode according to an embodiment.
FIG. 5 to FIG. 8 each illustrate a cross-sectional view of an electrode according to another embodiment.
FIG. 9 illustrates a schematic perspective view of a rechargeable battery according to an embodiment.
FIG. 10 illustrates a cross-sectional view taken along a line X-X' of FIG. 9.

### DETAILED DESCRIPTION

Hereinafter, the present disclosure will be described more fully with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

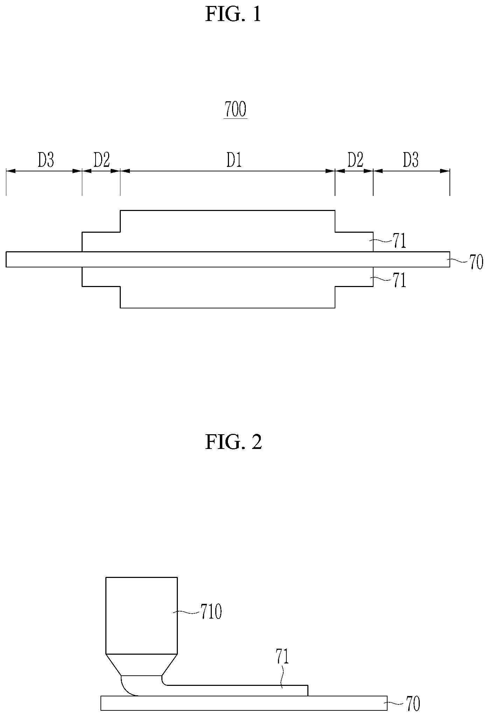

FIG. 1 illustrates a schematic cross-sectional view of an electrode according to an embodiment.

As illustrated in FIG. 1, an electrode 700 according to an embodiment of the present disclosure includes a substrate 70 and an active material layer 71 disposed on the substrate 70. For example, as illustrated in FIG. 1, one active material layer 71 may be on each of two opposite sides of the substrate 70. For example, as further illustrated in FIG. 1, the active material layer 71 may cover only a portion of the substrate 70 in the longitudinal direction of the substrate 70, such that an uncoated region D3 at an edge of the substrate 70 may include no active material layer thereon (i.e., the substrate 70 may be exposed in the uncoated region D3).

The active material layer 71 includes a first portion D1 and a second portion D2 with different thicknesses. For example, as illustrated in FIG. 1, the first portion D1 of the active material layer 71 may be in the center of the active material layer 71, e.g., in the center of the active material layer 71 along a longitudinal direction of the active material layer 71. The second portion D2 is an edge of the active material layer 71, and is positioned at opposite sides (e.g., opposite edges) of the first portion D1, e.g., along the longitudinal direction of the active material layer 71. For example, as illustrated in FIG. 1, the thickness of the first portion D1 may be greater than the thickness of the second portion D2 (e.g., along a direction normal to a major surface of the active material layer 71). For example, a width of the second portion D2 (e.g., along the longitudinal direction of the active material layer 71) may be 3 mm or more.

The thickness of the first portion D1 may be thicker than the thickness of the second portion D2. The active material layer is pressed after application, and the second portion D2 before pressing may have a thickness of 1/3 to 2/3 of the thickness of the first portion D1. In a case of being pressurized, pressure is mainly applied to the relatively protruding first portion D 1, and thus the thicknesses of the first portion D1 and the second portion D2 may be the same or similar after pressurization. For example, as the first portion D1 with an initial thicker thickness undergoes a pressurizing process (e.g., compression) and has a reduced thickness after pressurizing (e.g., a thickness similar to a thickness of the second portion D2), the density of the first portion D1 (after pressurizing) may be higher than the density of the second portion D2 due to the compressed structure of the first portion D1.

In this way, in a case where an edge thickness of the active material layer 71 is made relatively thin compared to other portions of the active material layer 71, damage to the substrate 70 due to a difference in elongation may be prevented even though the active material layer formed in multiple rows is pressurized together after applying the active material through multi-row coating.

FIG. 2 to FIG. 4 each illustrate a view for describing an manufacturing process for an electrode according to an embodiment.

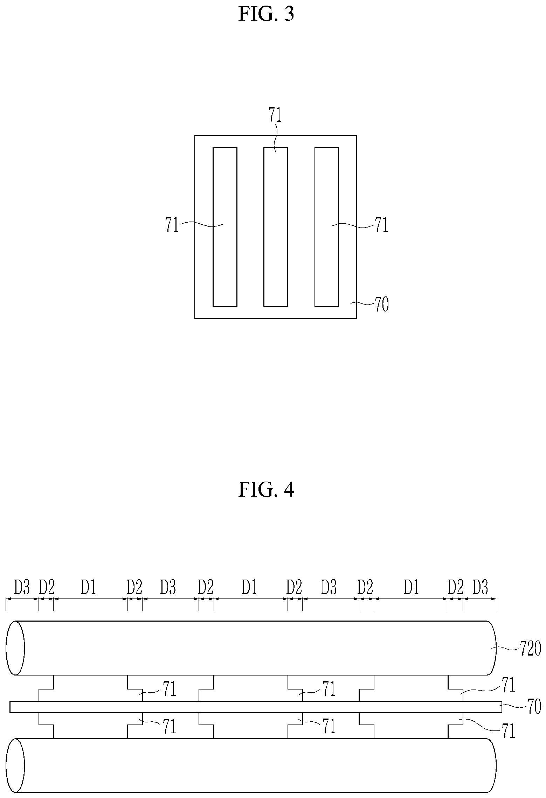

As illustrated in FIGS. 2 and 3, the active material layer 71 may be formed by applying an active material through a coating device 710 on the substrate 70 that is the active material layer 71 may be continuously supplied from the coating device 710 onto the substrate 70 through a roll. The active material layer 71 may be formed in multiple rows at regular intervals.

For example, as illustrated in FIG. 1, the edge of the active material layer 71 may be formed to have a thin thickness by controlling a discharged amount of the active material through the coating device 710.

Thereafter, as illustrated in FIG. 4, a pressurizing process may be performed together on the multiple rows of active material layers 71, e.g., all the rows of the active material layers 71 may be pressurized simultaneously. The pressurizing process may be performed using a roller 720, and the roller 720 may pressurize the active material layer 71 by contacting the relatively protruding first portion D1 of the active material layer 71.

In the instant case, the pressure transmitted to the first portion D1 may also be transmitted to the second portion D2, but the second portion D2 is not pressed by direct contact with the roller 720, and thus relatively small pressure may be transmitted to the substrate 70. In other words, pressure transmitted from the first portion D1 directly to a first portion of the substrate 70 overlapped by the first portion D1 may be larger than pressure transmitted from the first portion D1 indirectly to a second portion of the substrate 70 overlapped by the second portion D2, thereby generating a gradually reduced pressure applied to the substrate 70 through the first portion D1 and the second portion D2. Accordingly, the pressure applied to the substrate 70 overlapping the first portion D1, the second portion D2, and an uncoated region D3 is sequentially reduced.

Conventionally, pressure is not applied to an uncoated region, and pressure is applied only to a coated region of the substrate overlapped by an active material layer (e.g., via an active material layer having a uniform thickness), a difference in elongation increased due to a pressure difference between the uncoated region and the coated area, resulting in damage to the substrate. However, in an embodiment of the present disclosure, the pressure applied from the coated to the uncoated region may be gradually reduced by forming a relatively thin second portion D2 between the uncoated region D3 and the first portion D1, which is the applied region, preventing damage to the substrate by reducing the difference in elongation due to the pressure difference between the uncoated region and the coated region.

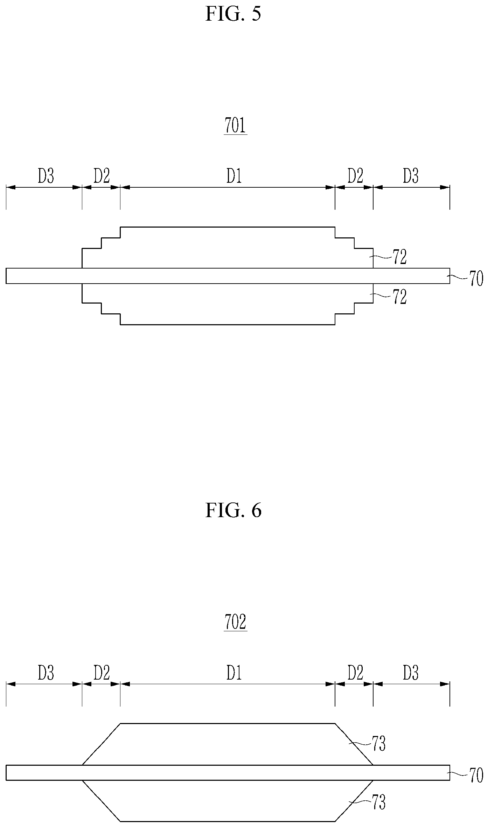

FIG. 5 to FIG. 8 each illustrate a cross-sectional view of an electrode according to another embodiment.

Most electrodes according to other embodiments of the present disclosure illustrated in FIGS. 5 to 8 are the same as the electrode in FIG. 1, and thus only different portions will be described in detail.

An electrode 701 according to another embodiment of the present disclosure illustrated in FIGS. 5 and 6 may include a substrate 70 and an active material layer disposed on the substrate 70.

Referring to FIG. 5, the active material layer 72 may include a first portion D1 and a second portion D2 having different thicknesses, and the second portion D2 may be formed of a plurality of portions with different thicknesses to form a multi-stage structure. For example, as illustrated in FIG. 5, the first portion D1 may have a uniform thickness, and the second portion D2 may have a non-uniform thickness, i.e., the second portion D2 may have two different (e.g., discontinuous) thicknesses defining a stair-shaped profile in a cross-sectional view.

Furthermore, as illustrated in FIG. 6, the active material layer 73 includes a first portion D1 and a second portion D2 with different thicknesses, and the second portion D2 may be formed to gradually become thinner as it moves away from the first portion D1. For example, as illustrated in FIG. 6, the first portion D1 may have a uniform thickness, and the second portion D2 may have a non-uniform thickness, i.e., the second portion D2 may have a continuously decreasing thicknesses defining a slope-shaped profile in a cross-sectional view.

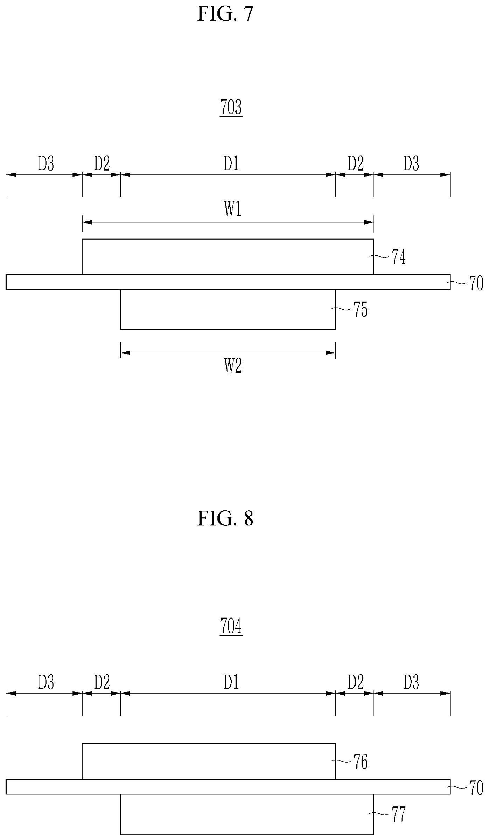

In the above embodiment, an example has been given in which the active material layer is symmetrical around the substrate on first and second surfaces of the substrate, but the present disclosure is not limited thereto, and it may be formed asymmetrically as shown in FIGS. 7 and 8.

Referring to FIG. 7, an electrode 703 according to another embodiment may include active material layers 74 and 75 disposed on the substrate 70, and the active material layers 74 and 75 include the first portion D1 and the second portion D2 may have different thicknesses. The different thicknesses of the first portion D1 and the second portion D2 may refer to a total combined thickness of the stacked active material layers 74 and 75.

The active material layers 74 and 75 may include an upper active material layer 74 and a lower active material layer 75, and a portion with a different thickness indicates that the thickness is different based on the entire active material layer including the upper and lower active material layers.

The upper active material layer 74 may be formed to have a different width from that of the lower active material layer 75. Accordingly, a width W1 of the upper active material layer 74 may be greater than a width W2 of the lower active material layer 75, and thus the upper active material layer 74 may extend beyond a boundary of the lower active material layer 75. The width W1 of the upper active material layer 74 may be greater than the width W1 of the lower active material layer 75 by more than 3 mm. Accordingly, for the active material layers 74 and 75, a thickness of the first portion D1 may include a combined thickness of the upper active material layer 74 and the lower active material layer 75, and a thickness of the second portion D2 may include only the thickness of the upper active material layer 74 that extends beyond the lower active material layer 75. The thickness of the first portion D1 may be thicker than the thickness of the second portion D2.

Accordingly, for the active material layers 74 and 75, a thickness of the first portion D1 may include the upper active material layer 74 and the lower active material layer 75 is thicker than a thickness of the second portion D2 including the upper active material layer 74. The different thicknesses of the first portion D1 and the second portion D2 may refer to a total combined thickness of the stacked active material layers 76 and 77.

Referring to FIG. 8, an electrode 704 according to another embodiment includes active material layers 76 and 77 disposed on the substrate 70, and the active material layers 76 and 77 include the first portion D1 and the second portion D2 having different thicknesses.

The active material layers 76 and 77 include an upper active material layer 76 and a lower active material layer 77, and a portion with a different thickness indicates that the thickness is different based on the entire active material layer including the upper and lower active material layers.

The upper active material layer 76 and the lower active material layer 77 may be positioned offset from each other, and a width of the offset distance may be 3 mm or more.

Accordingly, for the active material layers 76 and 77, a thickness of the first portion D1 including the upper active material layer 76 and the lower active material layer 77 may be thicker than a thickness of the second portion D2 formed of the upper active material layer 76 or the lower active material layer 77.

As illustrated in FIGS. 7 and 8, even though the upper and lower active material layers are formed with uniform thickness, in a case where widths of the upper and lower active material layers are different as illustrated in FIG. 7, or are misaligned as illustrated in FIG. 8, it may be possible to reduce damage to the substrate due to a difference in elongation due to the pressure applied to the active material layer during pressurization as illustrated in FIG. 1.

That is, in a case of applying pressure after applying the active material layer, while the first portion D1 is pressurized by direct contact between a roller and the active material layer in the upper and lower directions, the second portion D2 may contact one of upper and lower rollers, and thus the pressure applied to the active material layer may be reduced, so damage to the substrate may not occur due to a difference in elongation between the coated regions D1 and D2 and the uncoated region D3.

The above electrodes can be used as a positive or negative electrode of a rechargeable battery, and will be described below with reference to the drawings.

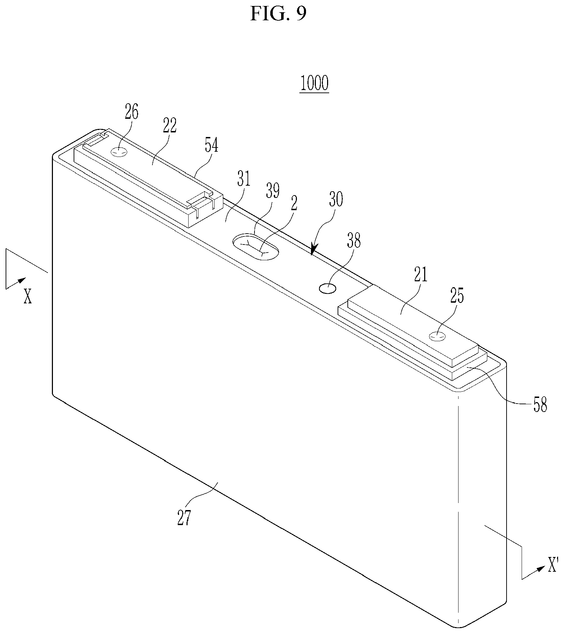

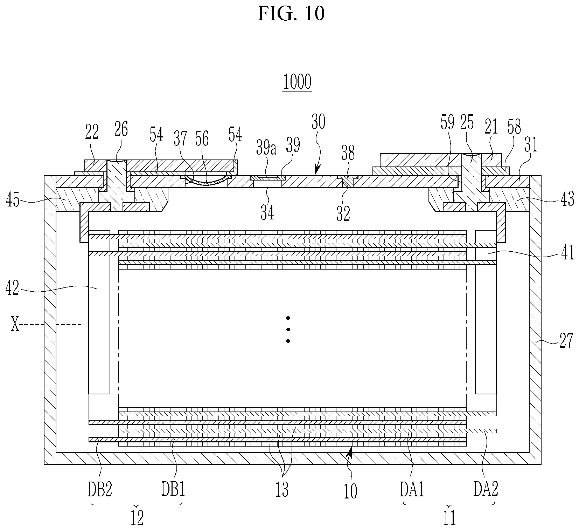

FIG. 9 illustrates a schematic perspective view of a rechargeable battery according to an embodiment, and FIG. 10 illustrates a cross-sectional view taken along a line X-X' of FIG. 9.

As illustrated in FIGS. 9 and 10, a rechargeable battery 1000 according to an embodiment of the present disclosure may include an electrode assembly 10, a case 27 accommodating the electrode assembly 10, and a cap assembly 30 installed in an opening of the case 27.

The electrode assembly 10 may include a positive electrode 11 and a negative electrode 12 that are sequentially stacked, and a separator 13 positioned therebetween. The separator 13 may be disposed between the positive electrode 11 and the negative electrode 12 and insulates them.

The electrode assembly 10 may be a jelly roll type in which the positive electrode (or first electrode) 11 and the cathode (or second electrode) 12 are wound around a winding axis with the separator 13 therebetween and then are pressed flat.

The separator 13, which is a polymer film that allows lithium ions to pass therethrough, may be made of, e.g., polyethylene, polypropylene, polyvinylidene fluoride, or a multilayer film of two or more layers thereof, and may be used as a mixed multilayer membrane, such as polyethylene/polypropylene two-layer membrane, polyethylene/polypropylene/polyethylene three-layer membrane, polypropylene/polyethylene/polypropylene three-layer membrane, etc.

The positive electrode 11 may have a structure of any one of the electrodes illustrated in FIGS. 1 to 8 and may include a first portion and a second portion having different thicknesses.

The positive electrode 11 includes an electrode active portion DA1 and an electrode uncoated portion DA2, and the electrode active portion DA1 may include a substrate formed of a thin metal foil and a positive active material layer made of a positive active material on the substrate. The electrode uncoated portion DA2, which is a region where the positive active material layer is not formed to expose the substrate, may be a portion extending from the substrate of the electrode active portion DA1.

As illustrated in FIG. 10, an electrode uncoated portion DA2 of the positive electrode may be positioned at a first side end of the positive electrode 11 along a longitudinal direction of the positive electrode 11.

The substrate of the positive electrode 11 may be made of aluminum, and as a positive active material, a compound capable of reversible intercalation and deintercalation of lithium (lithiated intercalation compound) may be used. For example, at least one of composite oxides of lithium and a metal selected from cobalt, manganese, nickel, and a combination thereof may be used. In the positive electrode 11, a content of the positive active material may be 90 wt% to 98 wt%, preferably 94 wt% to 98 wt%, with respect to a total weight of the positive active material.

In an embodiment, the positive active material may further include a binder and a conductive material. In the instant case, a content of the binder and the conductive material may each be 1 wt% to 5 wt%, preferably 1 wt% to 3 wt%, with respect to a total weight of the positive active material layer.

The binder serves to ensure that positive active material particles adhere to each other and the positive active material adheres to the positive electrode substrate. Examples of binders may include, e.g., polymers including polyvinyl alcohol, carboxymethylcellulose, hydroxypropylcellulose, diacetylcellulose, polyvinyl chloride, carboxylated polyvinyl chloride, polyvinyl fluoride, ethylene oxide, polyvinylpyrrolidone, polyurethane, polytetrafluoroethylene, polyvinylidene fluoride, polyethylene, polypropylene, styrene butadiene rubber, acrylated styrene butadiene rubber, epoxy resin, nylon, etc., but the present disclosure is not limited thereto.

The conductive material may be used to impart conductivity to the electrode, and any electronic conductive material that does not cause a chemical change in the battery may be used.

The negative electrode 12 may have a structure of any one of the electrodes illustrated in FIGS. 1 to 8 and includes a first portion and a second portion having different thicknesses.

The negative electrode 12 may include an electrode active portion DB1 and an electrode uncoated portion DB2, and the electrode active portion DB1 may include a substrate formed of a thin metal foil and a negative active material layer made of a negative active material on the substrate (or intermediate layer). The electrode uncoated portion DB2, which is a region where the negative active material layer is not formed to expose the substrate, may be a portion extending from the substrate of the electrode active portion DB1.

The electrode uncoated portion DB2 of the negative electrode 12 may be positioned at a second side end of the negative electrode 12 along a longitudinal direction of the negative electrode 12. In the instant case, the electrode uncoated portion DA2 of the positive electrode 11 and the electrode uncoated portion DB2 of the negative electrode 12 may be positioned at opposite sides of the electrode active portions DA1 and DB1 (e.g., at opposite sides of the electrode assembly 10).

In other embodiments, the electrode uncoated portions of the positive and negative electrodes may each have a shape that protrudes at regular intervals along a direction in which the substrate is wound, or may be positioned at a tip or end of the wound electrode assembly.

The electrode assembly 10 may be accommodated in the case 27 together with the electrolyte, and the electrolyte may include a non-aqueous organic solvent and a lithium salt.

The non-aqueous organic solvent may serve as a medium through which ions involved in the electrochemical reaction of the battery may move.

The lithium salt is dissolved in an organic solvent and acts as a source of lithium ions in the battery, enabling an operation of a basic lithium rechargeable battery, and is a substance that promotes movement of lithium ions between the positive and negative electrodes. Representative examples of the lithium salt may include one or more supporting electrolyte salts selected from the group including LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) where each of x and y is a natural number, e.g., an integer from 1 to 20), LiCl, LiI, and LiB(C₂O₄)₂ (lithium bis(oxalato) borate (LiBOB)). A concentration of the lithium salt is preferably within a range of 0.1 M to 2.0 M. In a case where a concentration of lithium salt is within an above range, the electrolyte has appropriate conductivity and viscosity so as to exhibit excellent electrolyte performance, and to allow lithium ions to effectively move.

The case 27 may be made of a metal such as aluminum, and may have a substantially rectangular parallelepiped shape. A first side of the case 27 may be open, and a cap plate may be installed at the open side of the case 27.

The cap assembly 30 may include a cap plate 31 coupled to the case 27 to block the opening of the case 27, and a positive terminal 21 electrically connected to the positive electrode 11 and a negative terminal 22 electrically connected to the negative electrode 12, each of which protrudes to the outside of the cap plate 31.

The cap plate 31 may be formed in the form of an elongated plate extending in a direction, and is coupled to the opening of the case 27.

The cap plate 31 may have an inlet 32 that extends through an interior thereof. The inlet 32 may be for implanting electrolyte, and a sealing stopper 38 may be installed therein. Furthermore, a vent plate 39 with a notch 39a may be installed in the vent hole 34 such that the cap plate 31 may be opened at a predetermined pressure.

The positive terminal 21 and the negative terminal 22 are installed to protrude above the cap plate 31. The positive is electrically connected to the positive electrode 11 through a current collection tab 41, and the negative terminal 22 is electrically connected to the negative electrode 12 through a current collection tab 42.

A terminal connection member 25 may be installed between the positive terminal 21 and the current collection tab 41 to electrically connect the positive terminal 21 and the current collection tab 41. The terminal connection member 25 may be inserted into the hole formed in the positive terminal 21, an upper end thereof may be fixed to the positive terminal 21 by welding, and a lower end thereof is fixed to the current collection tab 41 by welding.

A gasket 59 for sealing may be inserted into a hole through which the terminal connection member 25 extends between the terminal connection member 25 and the cap plate 31, and a lower insulating member 43 into which a lower portion of the terminal connection member 25 may be inserted is installed below the cap plate 31. A connection plate 58 may be installed between the positive terminal 21 and the cap plate 31 to electrically connect them. The terminal connection member 25 may be installed by being inserted into the connection plate 58. Accordingly, the cap plate 31 and the case 27 may be charged with the positive electrode 11.

A terminal connection member 26 may be installed between the negative terminal 22 and the current collection tab 42 to electrically connect the negative terminal 22 and the current collection tab 42. The terminal connection member 26 may be inserted into the hole formed in the negative terminal 22, an upper end thereof may be fixed to the positive terminal 22 by welding, and a lower end thereof may be fixed to the current collection tab 42 by welding.

Between the negative terminal 22 and the cap plate 31, a gasket 59 for sealing may be inserted and installed into a hole through which the terminal connection member 26 extends, and an upper insulating member 54 may be installed to insulate between the negative terminal 22 and the cap plate 31. The terminal connection member 26 may be installed by fitting into the hole of the upper insulating member 54, and the upper insulating member 54 may be formed to surround an end of the negative terminal 22.

Furthermore, a lower insulating member 45 may be installed below the cap plate 31 to insulate the negative terminal 22 and the current collection tab 42 from the cap plate 31.

A short-circuiting hole 37 may be formed in the cap plate 31, and a short-circuiting member 56 may be installed in the short-circuiting hole 37. The short-circuiting member 56 may include a curved portion convexly curved downward in an arc shape and an edge portion positioned on the outside of the curved portion and fixed to the cap plate 31. The upper insulating member 54 may have a cutout that overlaps the short-circuiting hole 37, and the short-circuiting member 56 may overlap the negative terminal 22 exposed through the cutout.

The short-circuiting member 56 may be electrically connected to the cap plate 31, and may be deformed in a case where an internal pressure of the rechargeable battery 1000 increases, causing short-circuiting between the positive electrode and the negative electrode. In a case where a gas is generated in the rechargeable (or secondary) battery due to an abnormal reaction, the internal pressure of the rechargeable battery rises. In a case where the internal pressure of the rechargeable battery becomes higher than a predetermined pressure, a curved portion is deformed to be convex upward, and in the instant case, the negative terminal 22 and the short-circuiting member 56 come into contact, causing a short-circuit.

In order to facilitate short-circuiting between the negative terminal 22 and the short-circuiting member 56, the negative terminal 22 may further include at least one protrusion (not illustrated) protruding toward the short-circuiting member 56, and the protrusion may be spaced apart from the short-circuiting member 56.

In the above embodiment, a rechargeable battery including a rectangular, e.g., square, case has been described, but the present disclosure is not limited thereto, and may include a cylindrical case and a pouch-type case.

Embodiments of the present disclosure provide an electrode for a rechargeable (or secondary) battery, an electrode assembly, and a rechargeable battery including the same, capable of minimizing damage to an electrode plate due to a difference in elongation between coated and uncoated regions even in a case where multiple active material columns are compressed without separating each active material column. That is, in an embodiment of the present disclosure, in a case where an active material layer is formed, damage to the electrode plate due to a difference in elongation between the coated region and the uncoated region may be minimized even though multiple rows of the active material layer are compressed.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of Symbols>

| | |
|---|---|
| 10: electrode assembly 11: positive electrode | |
| 12: negative electrode | 13: separator |
| 21: positive terminal 22: negative terminal | |
| 25, 26: terminal connection member | |
| 30: cap assembly | 31: cap plate |
| 54: upper insulating member | 58: connection plate |
| 70: substrate | 71, 72, 73, 74, 75: active material layer |
| 700, 701, 702, 703, 704: electrode | |
| 710: coating device | 720: roller |
| 1000: rechargeable (or secondary) battery | |

## Claims

1. An electrode (11, 12, 700, 701, 703, 704) for a rechargeable battery (1000) comprising:
a substrate (70) configured to have a first pressurized region and a second pressurized region; and
an active material layer (71, 72, 73, 74, 75, 76, 77) configured to have a first portion (D1) formed in the first pressurized region and a second portion (D2) formed in the second pressurized region,
wherein a thickness of the first portion (D1) is thicker than a thickness of the second portion (D2).

2. The electrode (11, 12, 700, 701, 703, 704) of claim 1, wherein
the active material layer (71, 72, 73, 74, 75, 76, 77) includes an upper active material layer (74, 76) disposed on a first surface of the substrate (70) and a lower active material layer (75, 77) disposed on a second surface of the substrate (70), and
the lower active material layer (75, 77) and the upper active material layer (74, 76) are formed to be symmetrical about the substrate (70).

3. The electrode (11, 12, 700, 701, 703, 704) of claim 1 or 2, wherein
the substrate (70) has an uncoated region (D3) where the active material layer (71, 72, 73, 74, 75, 76, 77) is not formed, and
the second portion (D2) is positioned between the first portion (D1) and the uncoated region.

4. The rechargeable battery electrode (11, 12, 700, 701, 703, 704) of any one of the preceding claims, wherein
a thickness of the second portion (D2) gradually decreases as it moves away from the first portion (D1).

5. The electrode (11, 12, 700, 701, 703, 704) of any one of the preceding claims, wherein
the second portion (D2) has a multi-stage structure including a plurality of portions with different thicknesses.

6. The electrode (11, 12, 700, 701, 703, 704) of claim 1, wherein
the active material layer (71, 72, 73, 74, 75, 76, 77) includes an upper active material layer (74, 76) disposed on a first surface of the substrate (70) and a lower active material layer (75, 77) disposed on a second surface of the substrate (70),
a first portion (D1) of the lower active material layer (75, 77) is positioned in a portion corresponding to the first portion (D1) of the upper active material layer (74, 76), and
the second portion (D2) of the upper active material layer (74, 76) and a second portion (D2) of the lower active material layer (75, 77) are positioned at opposite sides of the first portion (D1).

7. The electrode (11, 12, 700, 701, 703, 704) of claim 1, wherein
the first portion (D1) includes an upper active material layer (74, 76) disposed on a first surface of the substrate (70) and a lower active material layer (75, 77) disposed on a second surface of the substrate (70), and
the second portion (D2) includes the upper active material layer (74, 76).

8. The electrode (11, 12, 700, 701, 703, 704) of claim 7, wherein
the upper active material layer (74, 76) of the first portion (D1) and the upper active material layer (74, 76) of the second portion (D2) are formed integrally to have a same thickness.

9. The electrode (11, 12, 700, 701, 703, 704) of claim 7 or 8, wherein
the upper active material layer (74, 76) of the second portion (D2) extends beyond the lower active material layer (75, 77) of the first portion (D1).

10. The electrode (11, 12, 700, 701, 703, 704) of any one of claims 7 to 9, wherein
the upper active material layer (74, 76) of the second portion (D2) extends by 3 mm or more than a boundary of the lower active material layer (75, 77) of the first portion (D1).

11. The electrode (11, 12, 700, 701, 703, 704) of claim 1, wherein
the first portion (D1) includes an upper active material layer (74, 76) disposed on a first surface of the substrate (70) and a lower active material layer (75, 77) overlapping the upper active material layer (74, 76) and disposed on a second surface of the substrate (70), and
the second portion (D2) includes the upper active material layer (74, 76) that does not overlap the lower active material layer (75, 77), and the lower active material layer (75, 77) that does not overlap the upper active material layer (74, 76).

12. The electrode (11, 12, 700, 701, 703, 704) of claim 11, wherein
the upper active material layer (74, 76) of the first portion (D1) and the upper active material layer (74, 76) of the second portion (D2) are formed integrally to have a same thickness, and
the lower active material layer (75, 77) of the first portion (D1) and the lower active material layer (75, 77) of the second portion (D2) are formed integrally to have a same thickness.

13. The electrode (11, 12, 700, 701, 703, 704) of any one of the preceding claims, wherein a density of the first portion (D1) is larger than a density of the second portion (D2).

14. An electrode assembly (10, 101) comprising:
a first electrode (11, 12, 700, 701, 703, 704) configured to include the electrode (11, 12, 700, 701, 703, 704) of any one of the preceding claims;
a second electrode (11 ,12, 700, 701, 703, 704) configured to have opposite polarity to that of the first electrode (11, 12, 700, 701, 703, 704); and
a separator (13) positioned between the first electrode (11, 12, 700, 701, 703, 704) and the second electrode (11, 12, 700, 701, 703, 704);
wherein the separator (13) is wound with the first and the second electrodes (11, 12, 700, 701, 703, 704) in an overlapping state.

15. A rechargeable battery (1000) comprising:
the electrode assembly (10, 101) of claim 14;
a case (27) configured to accommodate the electrode assembly (10, 101) and an electrolyte solution together; and
a cap assembly (30) configured to seal the case (27).
